# EUROPEAN PATENT SPECIFICATION

(11) **EP 3 524 649 B1**
(45) Date of publication and mention of the grant of the patent: **20.04.2022**
(21) Application number: 19155442.7
(22) Date of filing: 05.02.2019
(51) Int. Cl.: C09D 11/101, C09D 11/322, C09D 11/38

(54) **RADIATION-CURABLE INK, DEPOSITED MATTER, AND METHOD FOR PRODUCING RADIATION-CURABLE INK**
STRAHLUNGSHÄRTBARE TINTE, ABGELAGERTES MATERIAL UND VERFAHREN ZUR HERSTELLUNG VON STRAHLUNGSHÄRTBARER TINTE
ENCRE DURCISSABLE PAR RAYONNEMENT, MATIÈRE DÉPOSÉE ET PROCÉDÉ DE PRODUCTION D'ENCRE DURCISSABLE PAR RAYONNEMENT

(30) Priority: 07.02.2018 JP 2018019984
(43) Date of publication of application: 14.08.2019
(73) Proprietor: Mimaki Engineering Co., Ltd., Tomi-City, Nagano 389-0512 (JP)
(72) Inventor: OHARA, Kazuki, Tomi-city, Nagano 389-0512 (JP); HASHIZUME, Hironori, Tomi-city, Nagano 389-0512 (JP); SAITO, Osamu, Tomi-city, Nagano 382-0512 (JP)
(74) Representative: Bandpay & Greuter

(56) References cited:
- EP-A1- 2 543 707
- EP-A2- 2 568 018
- EP-A2- 2 813 372
- JP-A- 2011 001 538

## Description

### BACKGROUND OF THE INVENTION

### TECHNICAL FIELD

The present invention relates to a radiation-curable ink, a deposited matter, and a method for producing the radiation-curable ink.

### BACKGROUND ART

As an ink for inkjet method, there is a radiation-curable ink. In the production of the printed matter using this ink, an ink layer is formed by ejecting the ink on a recording medium and the ink layer is cured by irradiating the ink layer with radiation rays such as ultraviolet rays. In general, a polymerizable compound that cures the ink can be used in the radiation-curable ink for the inkjet method instead of a volatile solution as a solvent to disperse or dissolve pigments. Therefore, the radiation-curable ink does not require drying of the solution during output and can achieve significant reduction in the period for delivery of the printed matter. Use of the radiation-curable ink allows various non-absorbable media such as a resin, a glass, and a metal to be printed.

In order to further improve performance, various studies have been made for the radiation-curable ink for the inkjet method.

For example, Patent Literature 1 has disclosed a composition including (A) an acrylate monomer having a glass transition temperature of the homopolymer of 0°C or lower in an amount of 20% by mass or larger and 65% by mass or smaller in reaction components, (B) a monofunctional acrylate having an alicyclic structure, and (C) a multifunctional acrylate having an alicyclic structure in an amount of 10% by mass or larger and 20% by mass or smaller in the reaction components as a radiation-curable ink having characteristics such as excellent flexibility, extension durability, abrasion resistance, and weatherability.

Patent Literature 2 has disclosed an ink including a cyclic trimethylolpropane formal acrylate (CTFA) in an amount of at least 50% by weight, at least one bifunctional or higher functional monomer in an amount of 3% by weight or lower, a high Tg monomer in an amount of lower than 5% by weight, and free-radical photoinitiator and hardly including a volatile organic compound and a plasticizer as a radiation-curable jet ink having characteristics of acceptable tackiness and a curing rate and low odor in both of the printing step and use by end users.

Patent Literature 1: Japanese Patent No. 5800122
Patent Literature 2: Japanese Patent Application Laid-open No. 2015-14009

### SUMMARY

The radiation-curable inks described in Patent Literature 1 and Patent Literature 2 have some advantages in characteristics of hardness, curability, odor, safety, and toughness. Several characteristics, however, have a room for improvement. Of these characteristics, the hardness and the toughness usually have trade-off relationship. Consequently, the radiation-curable ink for the inkjet method that is excellent in both of the characteristics has not existed.

Therefore, an object of the present invention of this application is to provide a radiation-curable ink that has low odor and excellent curability and can provide a printed matter that has excellent hardness and toughness.

The inventors of the present invention have studied to solve the above problems and have found that a radiation-curable ink is prepared by using a bulky specific monofunctional polymerizable compound having polarity and a bulky specific multifunctional polymerizable compound having an alicyclic structure and a printed matter is produced by a method such as the inkjet method, and that, surprisingly, a radiation-curable ink that provides characteristics of excellent curability, safety, and hardness and toughness of the printed matter as well as low odor, which have never been obtained until now can be obtained. The inventors of the present invention have further studied based on this finding and have accomplished the present invention.

Namely, in order to solve the above problem, the invention is set out in the appended set of claims. A radiation-curable ink includes a monofunctional polymerizable compound (β) having a heterocyclic structure in which a hetero atom is an oxygen atom, and a multifunctional polymerizable compound (γ) having an alicyclic structure.

The radiation-curable ink having the above constitution has low odor and excellent curability and allows a printed matter having excellent hardness and toughness to be obtained.

The radiation-curable ink preferably further includes a multifunctional polymerizable compound (Z) not having a bicyclo structure or a higher cyclic structure.

This constitution provides the printed matter of which hardness and toughness are more excellent.

The monofunctional polymerizable compound is preferably a monofunctional (meth)acrylate and the multifunctional polymerizable compound is preferably a multifunctional (meth)acrylate.

This constitution provides the radiation-curable ink of which curability is more excellent.

The monofunctional polymerizable compound (β) is preferably a cyclic trimethylolpropane formal acrylate (CTFA) represented by Formula (β1).

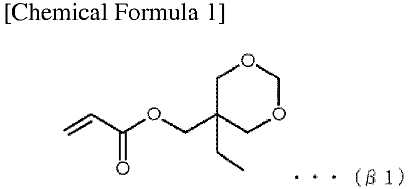

This constitution provides the printed matter of which odor and safety are excellent.

The alicyclic structure in the multifunctional polymerizable compound (γ) is preferably a bridged-cyclic hydrocarbon structure or a spiro-hydrocarbon structure.

This constitution provides the printed matter of which hardness and toughness are more excellent.

The multifunctional polymerizable compound (γ) is preferably tricyclodecane dimethanol diacrylate (TCDDA) or spiro-glycol diacrylate represented by Formula (γ2).

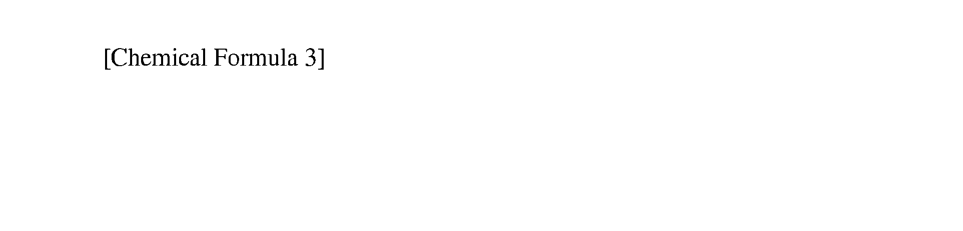

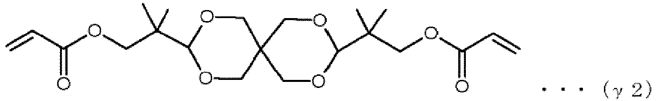

This constitution provides the printed matter of which hardness and toughness are more excellent.

The multifunctional polymerizable compound (Z) is preferably an alkylene oxide adduct.

This constitution provides the printed matter of which hardness and toughness are more excellent.

The multifunctional polymerizable compound (Z) is preferably at least one of the compounds selected from trimethylolpropane triacrylate represented by Formula (Z1) and pentaerythritol triacrylate represented by Formula (Z2), where n represents an integer of 1 or more.

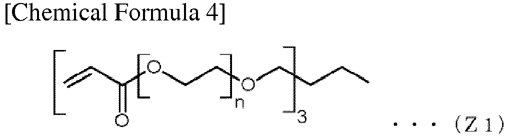

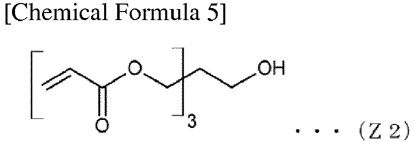

This constitution provides the printed matter of which hardness and toughness are more excellent.

The content of the monofunctional polymerizable compound (β) in the radiation-curable ink is preferably 20% by mass or more and 80% by mass or less, and
the content of the multifunctional polymerizable compound (Z) in the radiation-curable ink is preferably 1% by mass or more and 50% by mass or less.

This constitution provides the printed matter of which hardness and toughness are more excellent.

The radiation-curable ink preferably further includes an initiator and the initiator is preferably an acyl phosphine oxide-based initiator represented by Formula (I), where Rᵢ₁, Rᵢ₂, and Rᵢ₃ each are independently an alkoxyl group or a hydrocarbon group having or not having a substituent.

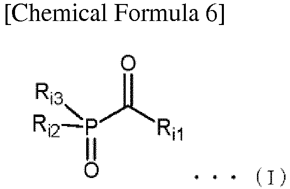

This constitution provides the radiation-curable ink of which curability is more excellent.

The radiation-curable ink is suitable for ink jet.

This radiation-curable ink for ink jet has excellent dispersibility and solubility of coloring agents, an appropriate viscosity, and low odor at the time of ink flying and provides excellent printing environment.

The deposited matter according to the second aspect of the present invention includes a base material, and an ink layer formed by curing the radiation-curable ink on the base material.

This deposited matter has excellent characteristics in that the performances such as hardness and toughness are excellent as well as odor is low.

A method for producing a radiation-curable ink according to the third aspect of the present invention in which the radiation-curable ink includes a polymerizable compound being an alkylene oxide adduct, the method includes
addition number determining steps of:
preparing a plurality of radiation-curable ink samples in which the addition numbers of the alkylene oxide adducts are different;
forming a plurality of cured samples by curing the radiation-curable ink samples;
measuring characteristics of each of the cured samples to obtain relationship between the addition number of the alkylene oxide adducts and the characteristics of cured matters; and
determining the addition number of the alkylene oxide adducts corresponding to desired characteristics based on the relationship; and
a preparing step of preparing the radiation-curable ink including the alkylene oxide adducts having the determined addition number.

According to the method for producing the radiation-curable ink having the above constitution, the radiation-curable ink in which a viscosity and characteristics such as hardness and toughness of the printed matter are controlled can be easily produced.

The polymerizable compound being the alkylene oxide adduct is preferably a (meth)acrylic compound being an alkylene oxide adduct.

According to the method for producing the radiation-curable ink having the above constitution, the viscosity and the hardness and toughness of the obtained printed matter are more easily controlled.

According to the present invention, the radiation-curable ink that has low odor and excellent curability and allows the printed matter having excellent hardness and toughness to be obtained can be provided.

### DESCRIPTION OF EMBODIMENTS

Subsequently, the present invention will be described in more detail.

The radiation-curable ink according to the present invention includes the monofunctional polymerizable compound (β) having a heterocyclic structure in which a hetero atom is an oxygen atom, and the multifunctional polymerizable compound (γ) having an alicyclic structure.

The radiation-curable ink refers to an ink composition that can solidify from a liquid by polymerizing with radiation rays or the like. The solidification includes change into a solid having flexibility and stretchability and gelation. In the present specification, such solidification may be described as curing.

In the present specification, the radiation rays (energy rays) mean the broad sense of radiation rays including ionized radiation rays and non-ionized radiation rays. More specifically, the radiation rays are not particularly limited as long as the radiation rays can provide energy generating initiation species in the ink by the irradiation of the radiation rays. Examples of the radiation rays widely include α rays, β rays, γ rays, X rays, electron beams, ultraviolet rays (UV), visible rays, and infrared rays. Of these radiation rays, ultraviolet rays and electron beams are preferable from the viewpoint of sensitivity of curing and easy availability of equipment and ultraviolet rays are particularly preferable.

### (Monofunctional polymerizable compound (β))

The monofunctional polymerizable compound (β) according to the present invention is a compound having a heterocyclic structure in which a hetero atom is an oxygen atom and having only one polymerizable functional group.

In the present specification, the term "polymerizability" means all reactivity in which a low molecular weight compound is changed into a macromolecular compound. Examples of the polymerizability include the reactivity of radical polymerization, anionic polymerization, cationic polymerization, condensation polymerization, crosslinking, and the like. Of these types of the reactivity, the reactivity of the radical polymerization, the cationic polymerization, and the crosslinking is preferable. Examples of the polymerizable compound include monomers, raw materials for condensation polymerization, and in addition, curable resins and semi-cured resins. Specific examples of the polymerizable compound include compounds having an unsaturated bond that is capable of addition polymerization of the anionic polymerization, the cationic polymerization, and the radical polymerization in the presence of ions and organic radicals and compounds having a functional group capable of condensation polymerization.

Examples of the polymerizable functional group include a vinyl group, a (meth)acrylic group, a vinyl ether group, and an epoxy group. In particular, the (meth)acrylic group is preferable from the viewpoint of a fast curing rate. The (meth)acrylic group means an acrylic group (acryloyl group) or a methacrylic group (methacryloyl group) and the acrylic group is preferable. Examples of the monofunctional polymerizable compound include a monofunctional (meth)acrylate and a monofunctional acrylate is preferable. Examples of the heterocyclic structure in which a hetero atom is an oxygen atom include saturated or unsaturated heteromonocyclic compounds including one or more oxygen atoms as hetero atoms in a 3-membered to 10-membered ring. Specific examples include saturated heteromonocyclic compounds including one oxygen atom as a hetero atom such as oxirane, oxetane, oxolane, oxane, oxepane, oxocane, oxonane, and oxecane and heteromonocyclic compounds including two oxygen atoms as hetero atoms such as 1,3-dioxetane, 1,3-dioxolane, 1,3-dioxane, 1,3-dioxepane, 1,3-dioxocane, 1,3-dioxonane, and 1,3-dioxecane. The heterocyclic structure may have aromaticity.

Examples of the monofunctional polymerizable compound (β) having a heterocyclic structure in which a hetero atom is an oxygen atom include a cyclic trimethylolpropane formal acrylate (CTFA) represented by Formula (β1).

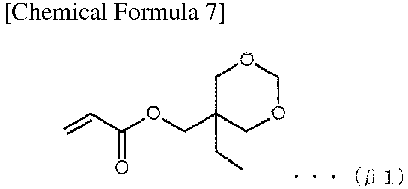

The content of the monofunctional polymerizable compound (β) in the radiation-curable ink in according to the present invention of this application is not particularly limited. The content is preferably 20% by mass or more and 80% by mass or less, more preferably 30% by mass or more and 70% by mass or less, and particularly preferably 40% by mass or more and 60% by mass or less. The monofunctional polymerizable compound (β) having the content in these ranges is preferable from the viewpoint of hardness and toughness of the printed matter.

### (Multifunctional polymerizable compound (γ))

The multifunctional polymerizable compound (γ) according to the present invention is a compound having an alicyclic structure and having two or more polymerizable functional groups. The alicyclic structure is a hydrocarbon ring structure not having aromaticity and a monocyclic structure or a polycyclic structure. The alicyclic structure is preferably the polycyclic structure. The alicyclic structure may be a heterocycle structure containing a hetero atom such as an oxygen atom, a nitrogen atom, or a sulfur atom. The oxygen atom is preferable as the hetero atom.

Examples of the polycyclic structure of the multifunctional polymerizable compound (γ) include a hydrocarbon structure in which two or more monocyclic structures having or not having saturated or unsaturated side chains are directly or indirectly bonded, a bridged-cyclic hydrocarbon structure in which two or more saturated alicyclic hydrocarbons have two or more atoms in common, and a spiro-hydrocarbon structure in which two rings are bonded to only one carbon atom.

Among these polycyclic structures, the bridged-cyclic hydrocarbon structure and the spiro-hydrocarbon structure are preferable. Examples of the bridged-cyclic hydrocarbon structure include dicyclopentadiene, tricyclodecane, which is a hydrogenated product of dicyclopentadiene, bicyclo[2.1.0]pentane, bicyclo[3.2.1]octane, bicyclo[2.2.1]hept-2-ene, and tricyclo[2.2.1.0^{2,6}]heptane. Examples of the spiro-hydrocarbon structure include spiro[3.4]octane, spiro[4.5]deca-1,6-diene, and a spiro-glycol containing oxygen atoms as hetero atoms. Examples of the polymerizable functional group include the functional groups described in the above monofunctional polymerizable compound (β). Examples of the multifunctional polymerizable compound include a bifunctional polymerizable compound and a trifunctional polymerizable compound. Specific examples of the multifunctional polymerizable compound include a multifunctional (meth)acrylate. A bifunctional (meth)acrylate is preferable and a bifunctional acrylate is more preferable.

More specific example of the multifunctional polymerizable compound (γ) include tricyclodecane dimethanol diacrylate (TCDDA) or spiro-glycol diacrylate represented by Formula (γ2).

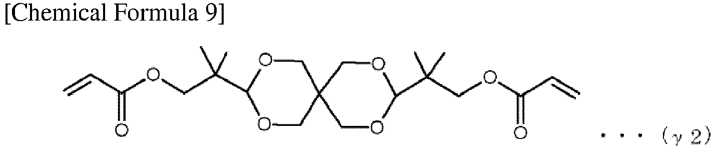

The multifunctional polymerizable compound (γ) is preferably TCDDA.

The content of the multifunctional polymerizable compound (γ) in the radiation-curable ink according to the present invention of this application is not particularly limited. The content is preferably 1% by mass or more and 50% by mass or less, more preferably 3% by mass or more and 30% by mass or less, further preferably 5% by mass or more and 20% by mass or less, and particularly preferably 10% by mass or more and 17% by mass or less. The multifunctional polymerizable compound (γ) having the content in these ranges is preferable from the viewpoint of flexibility of the printed matter.

### (Other components)

The radiation-curable ink according to the present invention preferably includes the multifunctional polymerizable compound (Z) not having a bicyclo structure or a higher cyclic structure.

### (Multifunctional polymerizable compound (Z))

The multifunctional polymerizable compound (Z) is a compound not having a bicyclo structure or a higher cyclic structure and having two or more polymerizable functional groups. For example, the multifunctional polymerizable compound (Z) is a compound having a chain structure or a monocyclic structure and having two or more polymerizable functional groups. The monocyclic structure may have aromaticity. Examples of the polymerizable functional groups include the functional groups described in the above monofunctional polymerizable compound (β). Examples of the multifunctional polymerizable compound (Z) include a bifunctional polymerizable compound and a trifunctional polymerizable compound. Specific examples of the multifunctional polymerizable compound include a multifunctional (meth)acrylate. More specific examples include a bifunctional (meth)acrylate and a trifunctional (meth)acrylate and the trifunctional acrylate is preferable.

The multifunctional polymerizable compound (Z) is preferably an alkylene oxide adduct. Examples of the alkylene oxide adduct include an ethylene oxide adduct and a propylene oxide adduct. Specifically, the alkylene oxide adduct is preferably trimethylolpropane triacrylate represented by Formula (Z1) and pentaerythritol triacrylate (PETA) represented by Formula (Z2).

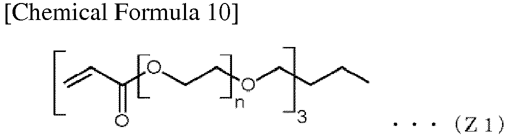

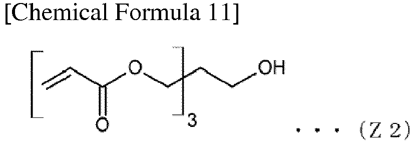

Here, n is an integer of 1 or more. For example, n is preferably 1, 2, 3, or 5. Specific examples of the multifunctional polymerizable compound (Z) include ethoxylated (3) trimethylolpropane triacrylate (EO3TMPTA), ethoxylated (6) trimethylolpropane triacrylate (EO6TMPTA), ethoxylated (9) trimethylolpropane triacrylate (EO9TMPTA), ethoxylated (15) trimethylolpropane triacrylate (EO15TMPTA), and pentaerythritol triacrylate (PETA). By controlling the addition number (n) of the alkylene oxide adduct, characteristics such as a viscosity and curability of the ink and strength, toughness, an elongation property, a bending property, adhesiveness, and abrasion resistance of the cured matter and the printed matter can be controlled.

The content of the multifunctional polymerizable compound (Z) in the radiation-curable ink according to the present invention of this application is not particularly limited. The content is preferably 1% by mass or more and 50% by mass or less, more preferably 3% by mass or more and 30% by mass or less, further preferably 5% by mass or more and 20% by mass or less, and particularly preferably 10% by mass or more and 17% by mass or less. The multifunctional polymerizable compound (Z) in the radiation-curable ink having the content in these ranges is preferable from the viewpoint of hardness and toughness of the printed matter.

### (Chain-structural monofunctional polymerizable compound (α))

The radiation-curable ink can include a chain-structural monofunctional polymerizable compound (α) as an optional component. Examples of the chain-structural monofunctional polymerizable compound (α) include a chain-structural monofunctional (meth) acrylate. Specific examples of the chain-structural monofunctional polymerizable compound (α) include an acrylate monomer having a glass transition point of the homopolymer of 0°C or less and not having an alicyclic structure such as tridecyl acrylate (TDA) and ethoxydiethylene glycol acrylate (EOEOEA), which are described in Patent Literature 1. The content of the chain-structural monofunctional polymerizable compound (α) in the radiation-curable ink is not particularly limited. The content is preferably less than 20% by mass, more preferably less than 10% by mass, and particularly preferably 0% by mass. The chain-structural monofunctional polymerizable compound (α) having the content in these ranges is preferable from the viewpoint of odor.

The radiation-curable ink according to the present invention preferably further includes an initiator. The initiator is not particularly limited as long as the initiator can start curing of the polymerizable compounds by irradiating the polymerizable compounds with the radiation rays.

Examples of the initiator include acyl phosphine oxide-based photopolymerization initiators such as (2,4,6-trimethylbenzoyl)-diphenyl-phosphine oxide, bis(2,6-dimethoxybenzoyl)-(2,4,4-trimethylpentyl)-phosphine oxide, bis(2,4,6-trimethylbenzoyl)-phenyl-phosphine oxide, and ethoxy-phenyl-(2,4,6-trimethylbenzoyl)-phosphine oxide; α-aminoalkylphenone-based initiators such as 4,4'-diaminobenzophenone; 1-hydroxycyclohexylphenylketone, 2,2-dimethoxy-2-phenylacetophenone, xanthone, fluorenone, benzaldehyde, fluorene, anthraquinone, triphenylamine, carbazole, 3-methylacetophenone, 4-chlorobenzophenone, 4,4'-dimethoxybenzophenone, Michler's ketone, benzoin propyl ether, benzoin ethyl ether, benzyl dimethyl ketal, 1-(4-isopropylphenyl)-2-hydroxy-2-methylpropan-1-one, 2-hydroxy-2-methyl-1-phenylpropan-1-one, thioxanthone, diethylthioxanthone, 2-isopropylthioxanthone, 2-chlorothioxanthone, and 2-methyl-1-[4-(methylthio)phenyl]-2-morpholino-propan-1-one. These initiators may be used singly or in combination.

Of these initiators, the acyl phosphine oxide-based photopolymerization initiator represented by Formula (I) is preferably used, where Rᵢ₁, Rᵢ₂, and Rᵢ₃ each are independently an alkoxyl group or a hydrocarbon group having or not having a substituent.

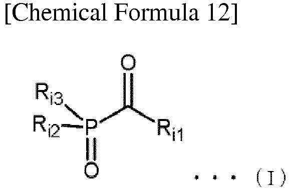

Examples of the hydrocarbon group include an alkyl group such as a methyl group, an ethyl group, and a propyl group, a phenyl group, and 2,4,6-trimethylphenyl group.

As the initiator, instead of using the α-aminoalkylphenone-based initiator, use of the acyl phosphine oxide-based photopolymerization initiator represented by Formula (I) is more preferable.

### (Coloring agent)

The radiation-curable ink according to the present invention preferably further includes a coloring agent. As the coloring agent, various coloring agents of CMYB can be appropriately used. The coloring agent can be dissolved or dispersed in the above polymerizable compound phase.

Examples of the coloring agents in the case of a cyan ink include C. I. Pigment Blue-1, 2, 3, 15:3, 15:4, 15:34, 16, 22, and 60.

Examples of the coloring agents in the case of a magenta ink include C. I. Pigment Red 5, 7, 12, 48 (Ca), 48 (Mn), 57 (Ca), 57:1, 112, 122, 123, 168, 184, 202, and 209 and C. I. Pigment Violet 19.

Examples of the coloring agents in the case of a yellow ink include C. I. Pigment Yellow 1, 2, 3, 12, 13, 14C, 16, 17, 73, 74, 75, 83, 93, 95, 97, 98, 109, 110, 114, 120, 128, 129, 130, 138, 150, 151, 154, 155, 180, and 185.

Examples of the coloring agents in the case of a black ink include HCF, MCF, RCF, LFF, and SCF manufactured by Mitsubishi Chemical Corporation; MONARCH and REGAL manufactured by Cabot Corporation; Color Black, Special Black, and Printex manufactured by Degussa-Huls AG; Toka Black manufactured by Tokai Carbon Co .,Ltd.; and Raven manufactured by Columbia Chemical Corporation.

The amount of the coloring agent to be blended is not particularly limited. For example, the amount is preferably from 1% by mass to 20% by mass and more preferably from 1% by mass to 10% by mass relative to the total amount of the radiation-curable ink as a basis.

### (Other component)

The radiation-curable ink according to the present invention may further include other components within a range that does not impair the effect of the present invention. Examples of other components include a sensitizer, a chain transfer agent, a polymerization inhibitor, a crosslinking agent, an antiaging agent, an antioxidant, an antiseptic, a phosphate ester-based or other flame retardant, a wetting and dispersing agent, an antistatic agent, a plasticizer, a surface lubricant, a leveling agent, a softener, an organic filler, and an inorganic filler.

Examples of the sensitizer include amines that do not cause addition reaction with the polymerization components such as trimethylamine, methyldimethanolamine, triethanolamine, p-diethylaminoacetophenone, ethyl p-dimethylaminobenzoate, isoamyl p-dimethylaminobenzoate, N,N-dimethylbenzylamine, and 4,4'-bis(diethylamino)benzophenone.

The chain transfer agent is not particularly limited as long as the chain transfer agent is a compound that can control the molecular weight of the polymer. Blending of the chain transfer agent can prevent the molecular weight of the cured matter from being excessively high at the time of radiation ray curing. Examples of the chain transfer agent include a thiol compound such as 2-mercaptobenzothiazole, and γ-mercaptoxypropyltrimethoxysilane and 2,4-diphenyl-4-methyl-pentene. The content of the chain transfer agent is not particularly limited. For example, the chain transfer agent can be blended in the radiation-curable ink in an amount of preferably from 0.1% by mass to 5% by mass, more preferably from 0.2% by mass to 4% by mass, and particularly preferably from 0.3% by mass to 3% by mass.

Examples of the polymerization inhibitor include 2,5-di-tert-butylhydroquinone, hydroquinone, methoquinone, p-methoxyphenol, butylhydroxytoluene, and nitrosamine salts. The content of the polymerization inhibitor is not particularly limited. For example, the polymerization inhibitor may be added in the radiation-curable ink in the range from 0.01% by mass to 2% by mass. The polymerization inhibitor can inhibit polymerization caused by, for example, heat generation by radiation ray curing and can improve storage stability of the radiation-curable ink.

### (Preparation of radiation-curable ink)

The method for preparing the radiation-curable ink according to the present invention is not particularly limited. For example, the coloring agent and the disperser are mixed with the polymerizable compounds and the resultant mixture is stirred to prepare a pigment dispersion of about 20% by mass. A mixture liquid including the monofunctional polymerizable compound (β) having a heterocyclic structure in which a hetero atom is an oxygen atom and the multifunctional polymerizable compound (γ) having a polycyclic structure, and initiator, the polymerization inhibitor, and the pigment dispersion, which are added if necessary, is dispersed using a stirrer or an emulsifier such as a homogenizer and a colloid mill.

The radiation-curable ink according to the present invention is not particularly limited by the applications of the radiation-curable ink. The radiation-curable ink, however, is suitable for the ink for inkjet because the ink itself is easily adapted to inkjet characteristics such as excellent dispersion and dissolution of the coloring agent and easy control of the viscosity, odor can be reduced during ink flying at the time of inkjet, and printing environment can be improved. For example, the radiation-curable ink satisfying any one or all characteristics such as a viscosity of 100 Pa·s or lower and preferably 50 mPa·s or lower and a value of odor evaluation of 8 or lower under conditions of the performance test described below is particularly suitable for the ink for inkjet.

The radiation-curable ink according to the present invention can provide a deposited body as an ink layer by depositing the ink using an inkjet method, a spry method, a bar coating method, or the like on a base material and irradiating the deposited ink with radiation rays from an LED light source or the like to cure the ink. The deposited body may be formed over the base material through a primer or the ink layer may be used as an overcoat or a primer.

The obtained deposited matter has excellent characteristics in that the performances such as hardness and toughness are excellent and that odor is low. Therefore, the deposited matter including the base material and the ink layer formed by curing the radiation-curable ink according to the present invention is particularly suitable for applications such as printed matters, indoor furnishings, toys, resin molded products, decoration parts, interior materials, building materials, medical supplies, and food packages.

### (Method for producing radiation-curable ink)

The radiation-curable ink according to the present invention can change the characteristics such as a viscosity and curability of the obtained ink and the characteristics such as strength, toughness, an elongation property, a bending property, adhesiveness, and abrasion resistance of the cured matter and the printed matter by including the alkylene oxide adduct into the polymerizable compounds and controlling the addition number of the alkylene oxide adduct. For example, in the case where the addition number of the alkylene oxide adduct is represented by n as Formula (Z1), change in the addition number n to 1, 2, 3, 4, or the like allows the characteristics such as strength to be changed. For example, as the addition number n becomes smaller, the strength can be increased.

This technique is not only applicable to the radiation-curable ink according to the present invention alone but also applicable to other radiation-curable ink. Namely, the specific radiation-curable ink having desired characteristics can be obtained by the method for producing a radiation-curable ink. The method includes including a polymerizable compound being an alkylene oxide adduct in the radiation-curable ink; 1) addition number determining steps of: preparing a plurality of radiation-curable ink samples in which the addition numbers of the alkylene oxide adducts are different; forming a plurality of cured samples by curing the radiation-curable ink samples; measuring characteristics of each of the cured samples to obtain relationship between the addition number of the alkylene oxide adducts and the characteristics of the cured matters; and determining the addition number of the alkylene oxide adducts corresponding to desired characteristics based on the relationship; and 2) a preparing step of preparing the radiation-curable ink including the alkylene oxide adducts having the determined addition number.

For example, the radiation-curable ink is formed by including a polymerizable compound being an alkylene oxide adduct in the radiation-curable ink. The method for producing the radiation-curable ink includes, 1) addition number determining steps of: preparing a plurality of radiation-curable ink samples in which the addition numbers of the alkylene oxide adducts are different; forming a plurality of coating film samples by applying the radiation-curable ink samples; measuring hardness of each of the coating film samples to obtain correlation information of the addition number of the alkylene oxide adducts and the hardness of the coating film samples; and determining the addition number of the alkylene oxide adducts corresponding to desired coating film hardness based on the correlation information; and 2) the preparing step of preparing the radiation-curable ink including the alkylene oxide adducts having the determined addition number. Consequently, the radiation-curable ink in which the viscosity and the characteristics such as hardness and toughness of the obtained printed matter are controlled can be easily produced. The radiation-curable ink in which the viscosity and the characteristics such as hardness and toughness of the obtained printed matter are controlled can be easily produced by including 1) addition number determining steps of determining the addition number of the alkylene oxide adducts, 2) a content determining step of determining the content of the alkylene oxide adducts, and 3) a preparation step of preparing the radiation-curable ink by including the alkylene oxide adducts having the determined addition number in the determined content.

In the case where the polymerizable compound being the alkylene oxide adduct is a (meth)acrylic compound being the alkylene oxide adduct, the viscosity and the hardness and toughness of the obtained printed matter are more easily controlled.

### (Examples)

Hereinafter, the present invention will be described with reference to Examples. The present invention, however, is not limited thereto. The performance tests of various solvent ink samples are carried out by the following methods. Here, "part" refers to part by mass unless otherwise noted. Examples 5, 6 and 9 are reference examples outside the scope of claims.

### (Viscosity)

Viscosity was measured using TVE-33L (manufactured by TOKI SANGYO CO., LTD.) under conditions of a measurement temperature of 25°C and a rotation number of 20 rpm. An ink having excessively high viscosity (for example, an ink having a viscosity of higher than 50 mPa·s and in particular an ink having a viscosity of higher than 100 mPa·s) is inappropriate for the ink for inkjet.

### (Odor)

A printed matter after curing was cut into pieces having a size of 5 cm × 5 cm and the cut pieces were placed in a plastic bag. The pieces were left to stand for 24 hours at room temperature and thereafter the odor was evaluated. The odor was evaluated in accordance with the following criteria and the values obtained from ten graders were calculated to obtain the average value. The sample having an average value of evaluation of seven or larger has practically acceptable level.
10-9: A level in which no odor is sensed.
8-7: A level in which odor is slightly sensed.
6-5: A level in which odor is sensed in some degree but is not an unpleasant level.
4-3: A level in which the sample has pronounced odor.
2-1: A level in which the sample has remarkably pronounced odor.

### (Curability)

The amount of ultraviolet rays irradiating the printed matter was varied. The coating film was scraped with a cotton swab. Whether the sample is cured is determined by observing the absence of scrape.
○: The sample is cured at 600 mJ/cm².
△: The sample is cured at 1200 mJ/cm².
×: 1800 mJ/cm² or more is required for curing.

### (Tackiness)

A printed film obtained by printing the ink to a white polyvinyl chloride sheet was touched with a finger to evaluate tackiness in accordance with the following criteria.
5: Tackiness is not virtually felt.
4: Tackiness is slightly felt.
3: Tackiness is felt in a certain degree.
2: Tackiness is felt.
1: Remarkable tackiness is felt.

### (Pencil hardness)

A printed film obtained by printing the ink onto a PET base material was scratched with pencils having each hardness at 45 degrees and a certain load for 1 cm. The pencil hardness was determined to be hardness of the pencil that does not generate scratch.

### (Abrasion resistance)

A printed film obtained by printing the ink to a white polyvinyl chloride sheet was worn with a sand paper (#400) for 100 times of reciprocation using a Gakushin type tester RT-300 (manufactured by DAIEI KAGAKU SEIKI MFG. co., ltd.). The load was 2 N and the worn speed was 30 times of reciprocation/min. The state of the printed film after the worn test was evaluated.
○: No exposure of base material.
△: A part (about 10%) of the base material is exposed.
×: More than 10% of the base material is exposed.

### (Elongation ratio)

A printed film obtained by printing the ink to a white polyvinyl chloride sheet was evaluated using a tensile tester Autograph AGS-1KNJ (manufactured by Shimadzu Corporation). The sample was elongated with a tensile speed of 50 mm/min and an elongation ratio until cracks were generated was calculated.

### (Bending resistance)

The bending resistance of a printed film obtained by printing the ink to a white polyvinyl chloride sheet was evaluated using a mandrel bending tester in accordance with JIS K5600-5-1 (Bend test (cylindrical mandrel)). The mandrels having a diameter of 2 mm, 3 mm, 4 mm, 5 mm, 6 mm, 8 mm, 10 mm, 12 mm, 16 mm, 20 mm, 25 mm and 32 mm were used. The minimum diameter of the mandrel at which cracks and peeling of the printed film obtained by printing the ink to a white polyvinyl chloride sheet were not observed was determined. As the obtained value becomes smaller, the bending resistance becomes better.

### (Adhesiveness)

A peeling test of the cross-cut of the printed film (2 mm square, 25 squares) was carried out with an adhesive cellophane tape. The number of the peeled squares out of 25 squares was determined. The results were evaluated in accordance with the following criteria.
5: The number of the peeled squares in the cross-cut test is 0.
4: The number of the peeled squares in the cross-cut test is from 1 to 5.
3: The number of the peeled squares in the cross-cut test is from 6 to 13.
2: The number of the peeled squares in the cross-cut test is from 14 to 19.
1: The number of the peeled squares in the cross-cut test is 20 or more.

### (Weatherability)

The printed matter was tested with ATLAS Weather-O-Meter Ci4000 (manufactured by Toyo Seiki Seisaku-sho, Ltd.) under conditions of light irradiation and water spray for 500 hours. Thereafter, the surface of the printed matter was observed.
○: No cracks are generated.
△: Microcracks are generated.
×: Cracks are generated in an entire surface.

### (Example 1)

### (Preparation of ink)

A pigment dispersion liquid E (pigment concentration 20% by mass) was prepared by blending 20 parts of Pigment Blue [15:3], 4 parts of Solsperse 32000 (pigment disperser, manufactured by Lubrizol Corporation), and 76 parts of CTFA (100 parts in total), mixing these materials, and stirring the resultant mixture. Subsequently, as listed in Table 1, a mixture liquid of 10 parts of the obtained pigment dispersion liquid E, 50.9 parts of CTFA as the monofunctional polymerizable compound (β) having a heterocyclic structure in which a hetero atom is an oxygen atom, 15 parts of TCDDA as the multifunctional polymerizable compound (γ) having a polycyclic structure, 15 parts of EO3TMPTA as the multifunctional polymerizable compound (γ), 5 parts of TPO as an initiator, 1 part of IRGACURE 819, 3 parts of DETX, 0.03 part of alba as the polymerization inhibitor, and 0.1 part of TEGO Rad2100 as a surface adjuster was dispersed with a horizontal bead mill (using zirconia beads having a diameter of 0.5 mm) to prepare a radiation-curable ink E1. The viscosity and odor of the obtained radiation-curable ink E1 were tested. The obtained results are listed in Table 1.

### (Preparation of printed matter)

Subsequently, a printed matter E1 was prepared with the radiation-curable ink E1 using an inkjet printer (trade name: UJF3042, multi-pass method, equipped with UV-LED lamp, manufactured by MIMAKI ENGINEERING CO., LTD.). The curability, the tackiness, the pencil hardness, the abrasion resistance, the elongation ratio, the bending resistance, the adhesiveness, and the weatherability were tested for a printing part having a 100% concentration in a solid pattern having a resolution of 720 × 600 dpi. The evaluation results are listed in Table 1.

### (Examples 2 to 9)

Radiation-curable inks E2 to E9 were prepared in the same manner as Example 1 in accordance with the formulations listed in Table 1. The viscosity and odor were tested using the obtained radiation-curable inks E2 to E9. The evaluation results are listed in Table 1.

Printed matters E2 to E9 were prepared in the same manner as Example 1 using the radiation-curable inks E2 to E9. The curability, the tackiness, the pencil hardness, the abrasion resistance, the elongation ratio, the bending resistance, the adhesiveness, and the weatherability were tested using the obtained printed matters E2 to E9. The evaluation results are listed in Table 1.

### (Comparative Examples 1 and 2)

### (Preparation of ink)

A pigment dispersion liquid R (pigment concentration 20% by mass) was prepared by blending 20 parts of Pigment Blue [15:3], 4 parts of Solsperse 32000 (pigment disperser, manufactured by Lubrizol Corporation), and 76 parts of 2-phenoxethyl acrylate (100 parts in total), mixing these materials, and stirring the resultant mixture. Radiation-curable inks R1 and R2 were prepared in the same manner as Example 1 using the pigment dispersion liquid R instead of the pigment dispersion liquid E in accordance with the formulations listed in Table 1. The radiation-curable inks R1 and R2 are corresponding to the radiation-curable inks described in Patent Document 1. The viscosity and odor were tested using the obtained radiation-curable inks R1 and R2. The evaluation results are listed in Table 1.

### (Preparation of printed matters)

Printed matters R1 and R2 were prepared in the same manner as Example 1 using the radiation-curable inks R1 and R2. The curability, the tackiness, the pencil hardness, the abrasion resistance, the elongation ratio, the bending resistance, the adhesiveness, and the weatherability were tested using the obtained printed matters R1 and R2. The evaluation results are listed in Table 1.

As can be seen from Table 1, the radiation-curable inks according to the present invention have appropriate viscosity, low odor, and excellent curability and provides the printed matters having excellent hardness and toughness.

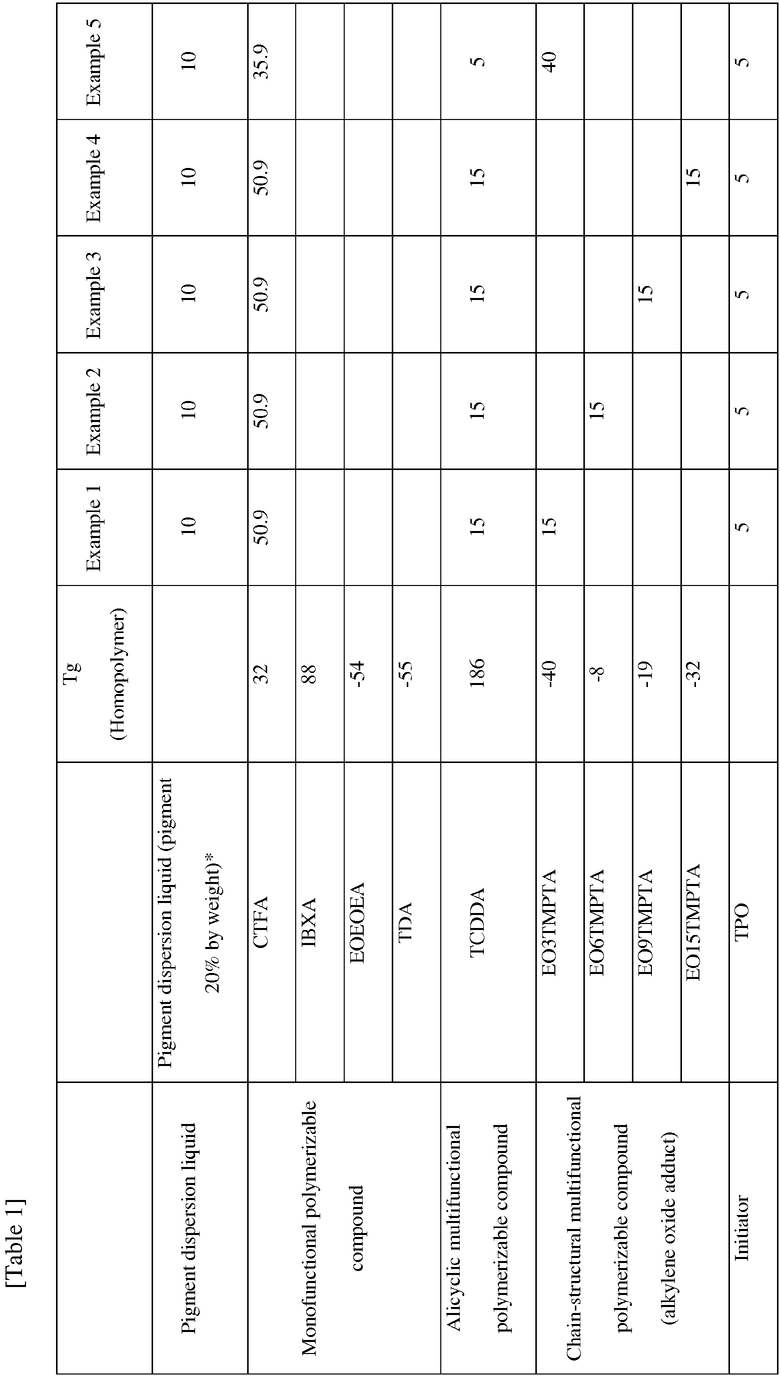

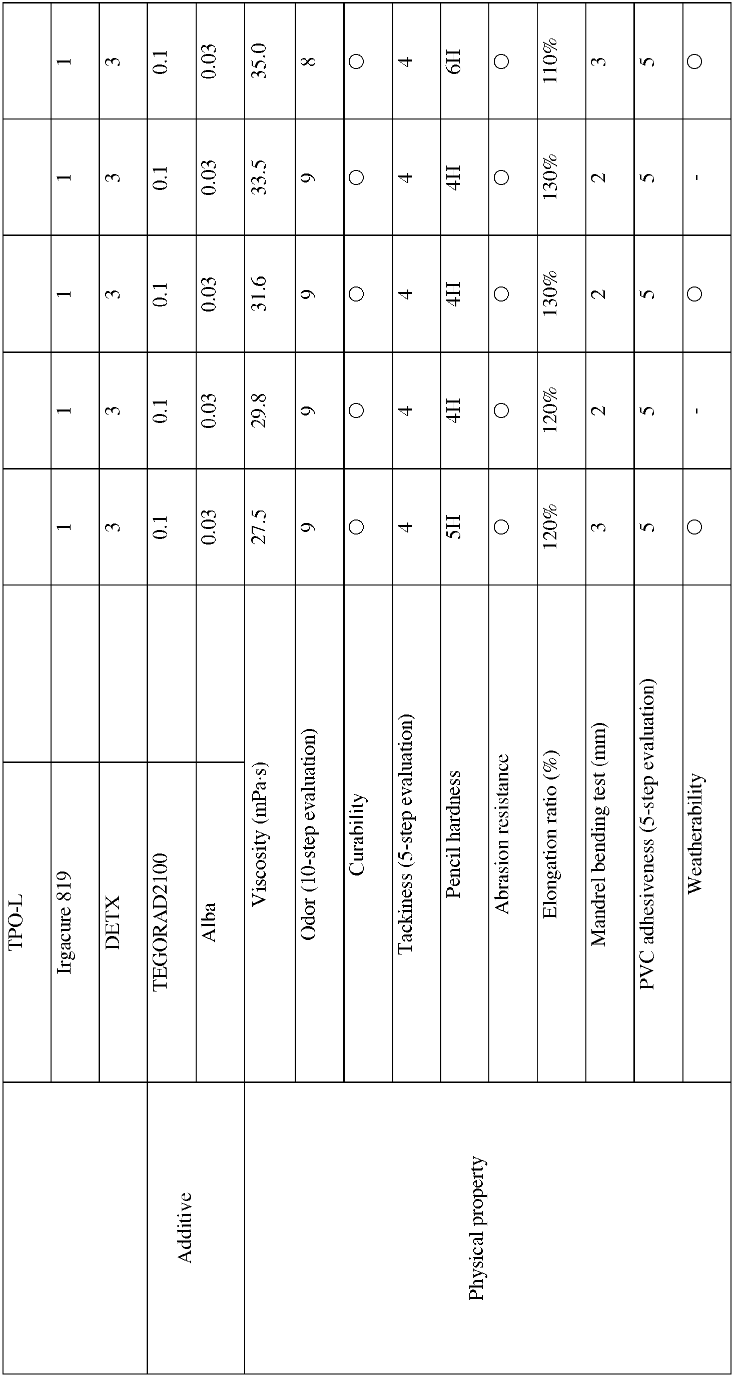

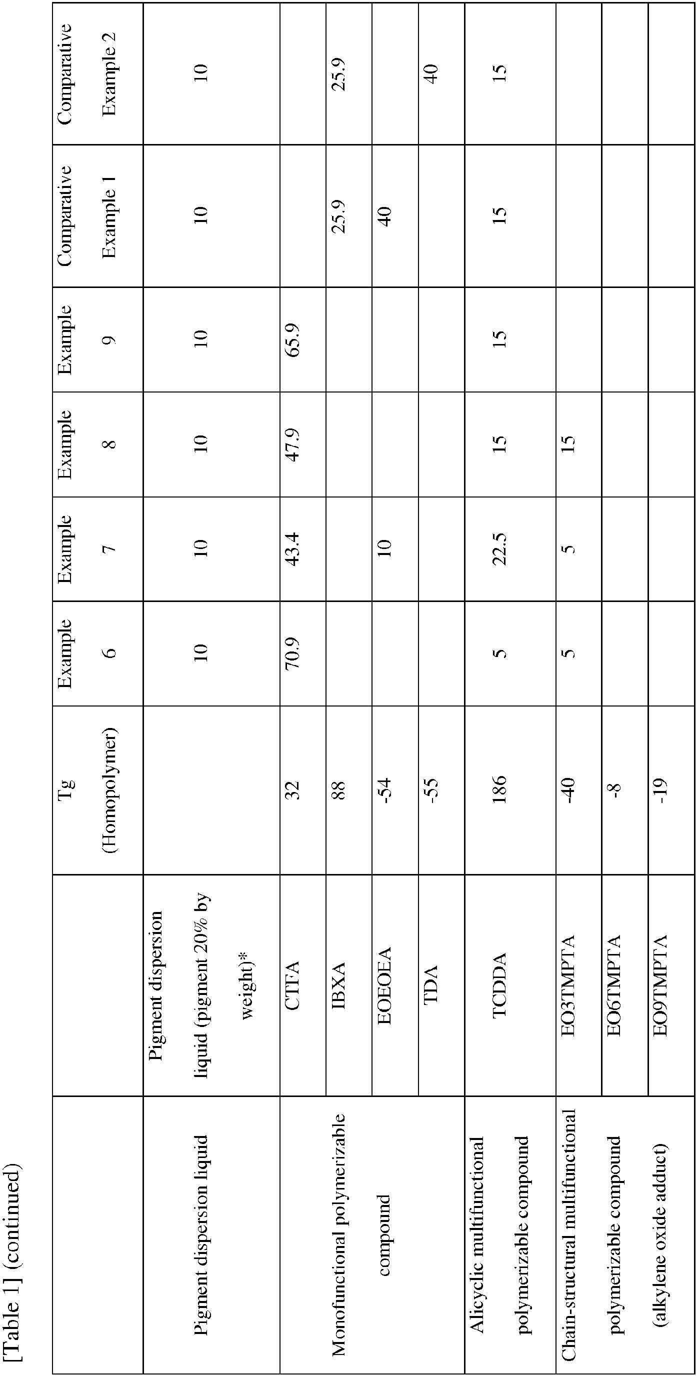

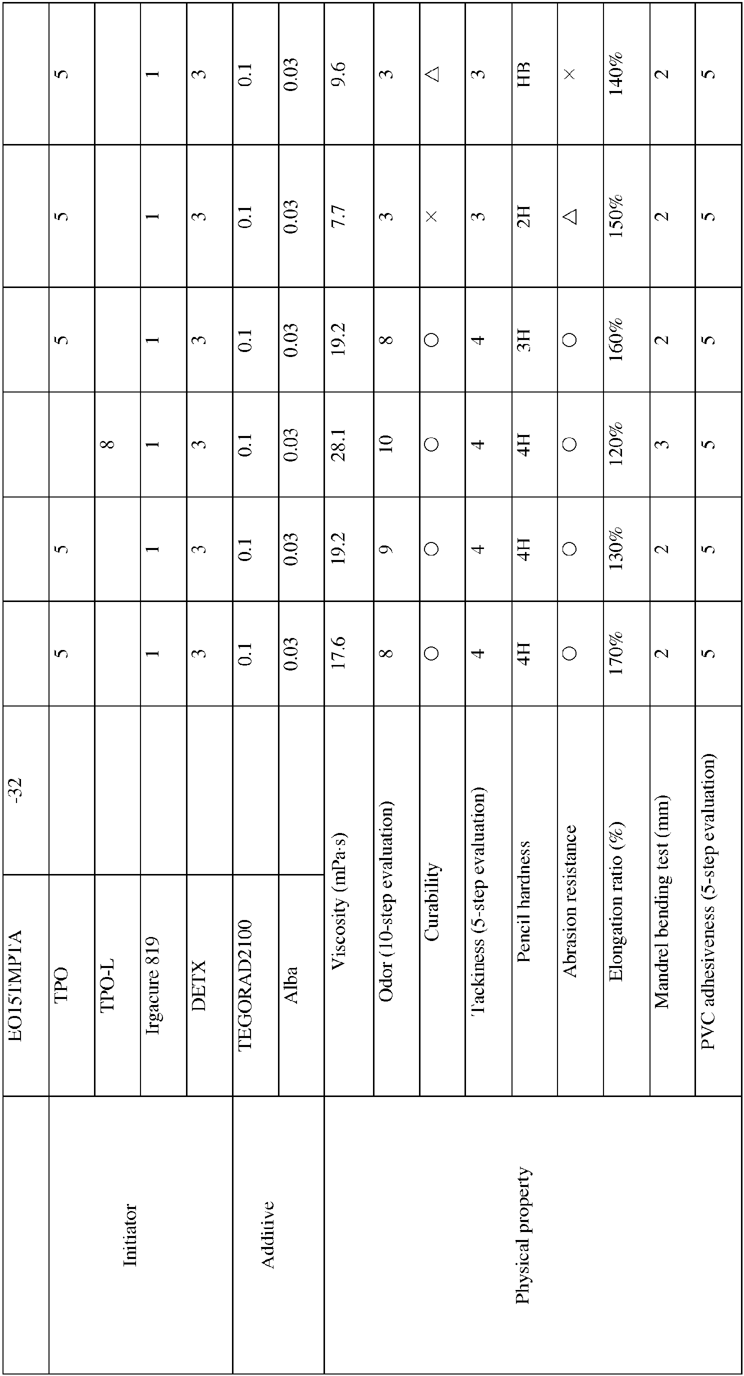

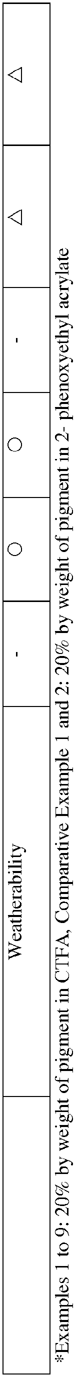

The abbreviations in Table 1 are as follows.
CTFA: Cyclic trimethylolpropane formal acrylate
IBXA: Isobornyl acrylate
EOEOEA: Ethoxydiethylene glycol acrylate
TDA: Tridecyl acrylate
TCDDA: Tricyclodecane dimethanol diacrylate
EO3TMPTA: Ethoxylated (3) trimethylolpropane triacrylate
EO6TMPTA: Ethoxylated (6) trimethylolpropane triacrylate
EO9TMPTA: Ethoxylated (9) trimethylolpropane triacrylate
EO15TMPTA: Ethoxylated (15) trimethylolpropane triacrylate
TPO: 2,4,6-Trimethylbenzoyl-diphenyl-phosphine oxide (manufactured by BASF SE)
TOP-L: Ethoxy-phenyl-(2,4,6-trimethylbenzoyl)-phosphine oxide
IRGACURE819: Bis(2,4,6-trimethylbenzoyl)-phenyl-phosphine oxide
DETX: 2,4-Diethylthioxanthen-9-one (manufactured by Lambson Ltd.)
TEGO Rad2100: Silicon acrylate
alba (NONFLEX ALBA): 2,5-Di-tert-butylhydroquinone (manufactured by Seiko Chemical Co., Ltd.)

As Examples 1 to 6 in Table 1 are shown, the physical property values such as the pencil hardness, the elongation ratio, and the mandrel bending test are different depending on the addition number and blended ratio of the alkylene oxide adducts. For example, Examples 2 to 4 indicate the same pencil hardness of 4H. However, as the addition number of the alkylene oxide adduct becomes larger, the hardness tends to become sensuously softer in the order from the printed matter E1 (Example 1) to the printed matter E4 (Example 4). As the content of the alkylene oxide adduct becomes higher, the printed matter tends to become harder in comparison of Example 1 with Example 5. Using the information, the radiation-curable ink having desired characteristic values can be prepared.

## Claims

1. A radiation-curable ink comprising:
40% by mass or more and 60% by mass or less of a monofunctional polymerizable compound(β) having a heterocyclic structure in which a hetero atom is an oxygen atom,
10% by mass or more and 17% by mass or less of a multifunctional polymerizable compound (γ) having an alicyclic structure, and
10% by mass or more and 17% by mass or less of a multifunctional polymerizable compound (Z) not having a bicyclo structure or a higher cyclic structure
wherein the monofunctional polymerizable compound (β) is a cyclic trimethylolpropane formal acrylate (CTFA) represented by Formula (βl), 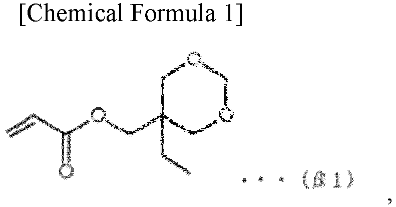
wherein the multifunctional polymerizable compound (γ) is tricyclodecane dimethanol diacrylate (TCDDA),
wherein the multifunctional polymerizable compound (Z) is at least one of the compounds selected from trimethylolpropane triacrylate represented by Formula (Zl) and pentaerythritol triacrylate represented by Formula (Z2), where n represents an integer of 1 or more.

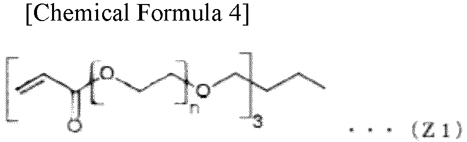

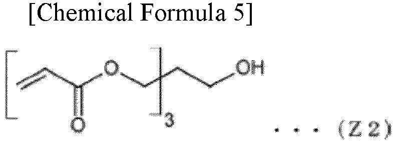

2. The radiation-curable ink according to claim 1, wherein the radiation-curable ink further comprises an initiator, and the initiator is an acyl phosphine oxide-based initiator represented by Formula (I), where Rᵢ₁, Ri₂ , and Rᵢ₃ each are independently an alkoxyl group or a hydrocarbon group having or not having a substituent.

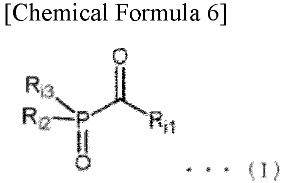

3. The radiation-curable ink according to any one of claims 1 to 2, wherein the radiation-curable ink is an ink for inkjet.

4. The radiation-curable ink according to any one of claims 1 to 3, wherein n in the Formula (Z1) represents an integer of 1, 2, 3 or 5.

5. A deposited matter comprising:
a base material, and
an ink layer formed by curing the radiation-curable ink as claimed in any one of claims 1 to 4 on the base material.

## Patentansprüche

1. Strahlungshärtende Tinte, die umfasst:
40 Masse-% oder mehr und 60 Masse-% oder weniger einer monofunktionellen polymerisierbaren Verbindung(β) mit einer heterocyclischen Struktur, wobei ein Heteroatom ein Sauerstoffatom ist,
10 Masse-% oder mehr und 17 Masse-% oder weniger einer monofunktionellen polymerisierbaren Verbindung (γ) mit einer alicyclischen Struktur, und
10 Masse-% oder mehr und 17 Masse-% oder weniger einer multifunktionellen polymerisierbaren Verbindung (Z), die keine Bicyclostruktur oder höhercyclische Struktur aufweist,
wobei die monofunktionelle polymerisierbare Verbindung (β) ein cyclisches Trimethylolpropanformalacrylat (CTFA) ist, das durch Formel (β1) dargestellt ist: 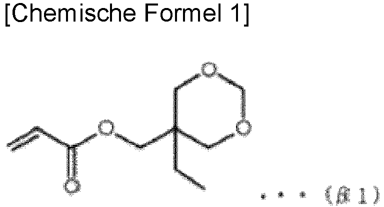
wobei die multifunktionelle polymerisierbare Verbindung (γ) Tricyclodecandimethanoldiacrylat (TCDDA) ist,
wobei die multifunktionelle polymerisierbare Verbindung (Z) zumindest eine der Verbindungen ist, die aus Trimethylolpropantriacrylat, das durch Formel (Z1) dargestellt ist, und Pentaerythrittriacrylat, das durch Formel (Z2) dargestellt ist, ausgewählt sind, wobei n eine ganze Zahl von mindestens 1 darstellt.

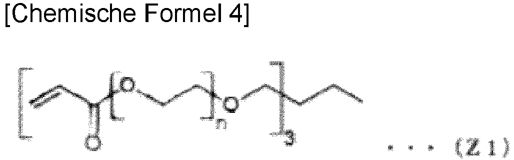

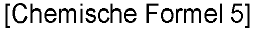

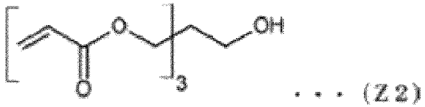

2. Strahlungshärtende Tinte nach Anspruch 1, wobei die strahlungshärtende Tinte ferner einen Initiator umfasst und der Initiator ein Initiator auf Acylphosphinoxidbasis ist, der durch Formel (I) dargestellt ist, wobei Rᵢ₁, Rᵢ₂ und Rᵢ₃ jeweils unabhängig eine Alkoxygruppe oder eine Kohlenwasserstoffgruppe mit oder ohne Substituenten sind.

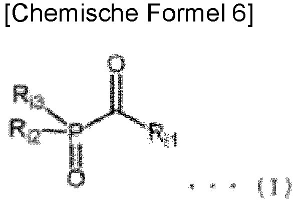

3. Strahlungshärtende Tinte nach einem der Ansprüche 1 bis 2, wobei die strahlungshärtende Tinte eine Tinte für Tintenstrahl ist.

4. Strahlungshärtende Tinte nach einem der Ansprüche 1 bis 3, wobei n in der Formel (Z1) eine ganze Zahl von 1, 2, 3 oder 5 darstellt.

5. Abgeschiedene Materie, die umfasst:
ein Basismaterial, und
eine Tintenschicht, die durch Härten der strahlungshärtenden Tinte nach einem der Ansprüche 1 bis 4 auf dem Basismaterial gebildet wurde.

## Revendications

1. Encre durcissable par rayonnement comprenant :
40 % en masse ou plus et 60 % en masse ou moins d'un composé polymérisable monofonctionnel (β) ayant une structure hétérocyclique dans laquelle un hétéroatome est un atome d'oxygène,
10% en masse ou plus et 17 % en masse ou moins d'un composé polymérisable multifonctionnel (γ) ayant une structure alicyclique, et
10 % en masse ou plus et 17 % en masse ou moins d'un composé polymérisable multifonctionnel (Z) n'ayant pas de structure bicyclique ou de structure cyclique supérieure
dans laquelle le composé polymérisable monofonctionnel (β) est un acrylate de triméthylolpropane formai cyclique (CTFA) représenté par la Formule (β1), 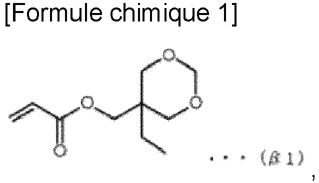
dans laquelle le composé polymérisable multifonctionnel (γ) est du diacrylate de tricyclodécane diméthanol (TCDDA),
dans laquelle le composé polymérisable multifonctionnel (Z) est au moins l'un des composés choisis parmi le triacrylate de triméthylolpropane représenté par la Formule (Z1) et le triacrylate de pentaérythritol représenté par la Formule (Z2), où n représente un nombre entier de 1 ou plus.

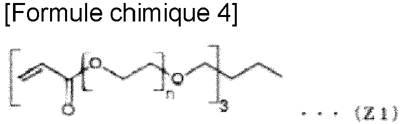

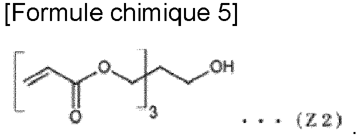

2. Encre durcissable par rayonnement selon la revendication 1, dans laquelle l'encre durcissable par rayonnement comprend en outre un initiateur, et l'initiateur est un initiateur à base d'oxyde d'acylphosphine représenté par la Formule (I), où Rᵢ₁, Rᵢ₂ et Rᵢ₃ sont chacun indépendamment un groupe alcoxyle ou un groupe hydrocarboné ayant ou n'ayant pas de substituent.

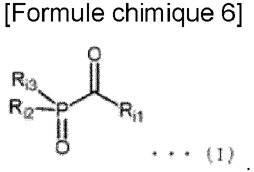

3. Encre durcissable par rayonnement selon l'une quelconque des revendications 1 à 2, dans laquelle l'encre durcissable par rayonnement est une encre pour jet d'encre.

4. Encre durcissable par rayonnement selon l'une quelconque des revendications 1 à 3, dans laquelle n dans la Formula (Z1) représente un nombre entier de 1, 2, 3 ou 5.

5. Matière déposée comprenant :
un matériau de base, et
une couche d'encre formée par durcissement de l'encre durcissable par rayonnement selon l'une quelconque des revendications 1 à 4 sur le matériau de base.
